# EUROPÄISCHE PATENTSCHRIFT

(11) **EP 3 037 292 B1**
(45) Veröffentlichungstag und Bekanntmachung des Hinweises auf die Patenterteilung: **10.10.2018**
(21) Anmeldenummer: 15197283.3
(22) Anmeldetag: 01.12.2015
(51) Int. Cl.: B60J 10/70

(54) **VERBINDUNGS-ANORDNUNG FÜR EINE FAHRZEUGSCHEIBE, INSBESONDERE FÜR EINE WINDSCHUTZSCHEIBE**
CONNECTION ASSEMBLY FOR A VEHICLE PANE, IN PARTICULAR FOR A WIND SCREEN
AGENCEMENT DE LIAISON POUR UNE VITRE DE VEHICULE, EN PARTICULIER POUR UN PARE-BRISE

(30) Priorität: 22.12.2014 DE 202014106202 U; 06.11.2015 DE 202015007654 U
(43) Veröffentlichungstag der Anmeldung: 29.06.2016
(73) Patentinhaber: REHAU AG + Co, 95111 Rehau (DE)
(72) Erfinder: FRANK, Michael, 48393 Wixom (US)

(56) Entgegenhaltungen:
- WO-A1-2009/141049
- DE-A1- 3 227 647

## Beschreibung

Die vorliegende Erfindung betrifft ein Verfahren zur Herstellung einer Verbindungs-Anordnung für eine Fahrzeugscheibe, insbesondere für eine Windschutzscheibe, mit einer Fahrzeugscheibe aus einem Verbundglas aufweisend wenigstens eine erste Glasscheibe und eine zweite Glasscheibe und eine zwischen den Glasscheiben angeordnete Zwischenschicht, und mit einem Verbindungselement zum Verbinden der Fahrzeugscheibe mit einem Anbauteil, wobei das Verbindungselement einen ersten Verbindungsabschnitt aufweist, der an der Fahrzeugscheibe festlegbar ist und einen zweiten Verbindungsabschnitt aufweist, der zur lösbaren Befestigung des Anbauteils eine Fügeaufnahme für ein Fügeelement des Anbauteils hat oder bildet.

Eine gattungsgemäße Verbindungs-Anordnung kann der Offenlegungsschrift WO 2009/141049 A1 entnommen werden. Nachteilig an einer Verbindungs-Anordnung gemäß dem Stand der Technik ist die Tatsache, dass zur Festlegung des Verbindungselementes an der Fahrzeugscheibe der erste Verbindungsabschnitt über eine Klebstoffschicht bzw. ein doppelseitiges Klebeband an der Unterseite der Fahrzeugscheibe festgelegt wird. Eine Klebeverbindung ist jedoch zum einen verfahrenstechnisch sehr aufwendig und zum anderen aufgrund der Materialkosten für die Klebeverbindung sehr teuer. Beispielhaft kann der Preis für ein doppelseitiges Klebeband in der gleichen Größenordnung wie der des gesamten Verbindungselementes liegen. Zudem weisen Klebeverbindungen eine begrenzte Verbindungsfestigkeit, insbesondere Schälfestigkeit auf.

Der Offenlegungsschrift DE 32 27 647 A1 kann ein Verfahren zur Herstellung einer Verbindungs-Anordnung entnommen werden, bei welcher ein erster Verbindungsabschnitt nachträglich in einen Spalt zwischen den Glasscheiben einer Fahrzeugscheibe eingeschoben und dadurch fixiert wird.

Aufgabe der vorliegenden Erfindung ist es daher, ein Verfahren zur Herstellung einer Verbindungs-Anordnung anzugeben, das eine zuverlässige und kostengünstige Verbindung von Fahrzeugscheibe und Verbindungselement ermöglicht.

Diese Aufgabe wird vorliegend erfüllt durch eine Verbindungs-Anordnung für eine Fahrzeugscheibe, insbesondere für eine Windschutzscheibe, mit einer Fahrzeugscheibe aus einem Verbundglas aufweisend wenigstens eine erste Glasscheibe und eine zweite Glasscheibe und eine zwischen den Glasscheiben angeordnete Zwischenschicht, und mit einem Verbindungselement zum Verbinden der Fahrzeugscheibe mit einem Anbauteil, wobei das Verbindungselement einen ersten Verbindungsabschnitt aufweist, der an der Fahrzeugscheibe festlegbar ist, und einen zweiten Verbindungsabschnitt aufweist, der zur lösbaren Befestigung des Anbauteils eine Fügeaufnahme für ein Fügeelement des Anbauteils hat oder bildet, wobei in einem Randbereich der Fahrzeugscheibe die Zwischenschicht soweit zurückgesetzt ist, dass der Randbereich einen Spalt zwischen den Glasscheiben aufweist und, dass der erste Verbindungsabschnitt innerhalb des Spaltes angeordnet und zwischen den Glasscheiben fixiert ist. Durch die Verbindungs-Anordnung kann auf eine Klebeverbindung verzichtet werden, da der erste Verbindungsabschnitt innerhalb des in dem Randbereich der Fahrzeugscheibe gebildeten Spalts fixiert, insbesondere form- und / oder kraftschlüssig fixiert ist. Der erste Verbindungsabschnitt wird bevorzugt zwischen den beiden Glasscheiben eingeklemmt. Bei der Zwischenschicht kann es sich um eine polymere Zwischenschicht, vorzugsweise aus Polyvinylbutyral (PVB), Ethylenvinylacetat (EVA), Polyacrylat (PA), Polymethylmethacrylat (PMMA), Polyurethan (PU) oder Thermoplastischen Elastomeren auf Urethanbasis (TPU) handeln.

Bevorzugt bildet der Randbereich den unteren Rand der Fahrzeugscheibe in deren Einbauzustand.

Das Verbindungselement kann ferner wenigstens einen Klemmabschnitt aufweisen, der zusammen mit dem ersten Verbindungsabschnitt eine der Glasscheiben randseitig umgreift. Durch den Klemmabschnitt kann die Fixierung des ersten Verbindungsabschnittes innerhalb des Spaltes weiter verbessert werden.

Die erste Glasscheibe kann in Einbaulage der Fahrzeugscheibe oberhalb der zweiten Glasscheibe angeordnet sein, und die erste Glasscheibe im Randbereich über die zweite Glasscheibe überstehen. Die erste Glasscheibe bildet insofern das sog. Oberglas und die zweite Glasscheibe das sog. Unterglas. Durch den Überstand der ersten Glasscheibe kann ein Großteil bzw. ein Teilbereich des Verbindungselementes durch die obenliegende erste Glasscheibe verdeckt werden.

Der erste Verbindungsabschnitt kann zumindest abschnittsweise Materialschwächungen, vorzugsweise Randausnehmungen, aufweisen. Unter einer Randausnehmung ist eine Ausnehmung zu verstehen, die zumindest auf einer Seite zu dem Rand des Verbindungsabschnittes hin offen ist. Ähnlich einem sogenannten Gliederband kann sich so der Verbindungsabschnitt bzw. das Verbindungselement besser an die Kontur des Randbereiches der Fahrzeugscheibe anpassen, welche in der Regel eine dreidimensionale Kurve beschreibt.

Die Fügeaufnahme kann eine Hinterschneidung zur Aufnahme eines als Rippe ausgebildeten Fügeelementes, welches kraft- und / oder formschlüssig in der Fügeaufnahme festlegbar ist, aufweisen.

Besonders bevorzugt ist das Verbindungselement als eine Profilleiste ausgebildet. Eine derartige Profilleiste lässt sich im Extrusionsverfahren herstellen. Weiter bevorzugt ist die Profilleiste als eine Kunststoff-Profilleiste ausgebildet. Eine derartige Kunststoff-Profilleiste lässt sich insbesondere im Kunststoff-Extrusionsverfahren bzw. Mehrkomponenten-Kunststoff-Extrusionsverfahren herstellen.

Die Kunststoff-Profilleiste kann Polysulfon (PSU), Poly(ethersulfone) (PES), Polyetherimide (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Polyvinylchlorid (PVC), Polyethylen (PE), Polypropylen (PP), Acrylnitril-Butadien-Styrol (ABS) oder Mischungen der vorgenannten Materialien umfassen.

Die Kunststoff-Profilleiste weist bevorzugt wenigstens bereichsweise eine Einlage aus einem metallischen Werkstoff oder aus einem faserverstärkten Kunststoff auf. Diese Einlage kann als separater Profilkörper ausgebildet sein oder im Wege der Mehrfachextrusion zusammen mit der Kunststoff-Profilleiste hergestellt werden.

In einer vorteilhaften Ausführungsform der Erfindung ist der erste Verbindungsabschnitt durch einen Teilbereich der Einlage gebildet. Die Einlage ist insofern nicht oder nicht vollständig mit dem Kunststoff der Kunststoff-Profilleiste bedeckt oder überhautet.

Das Verbindungselement kann wenigstens ein Dichtelement aufweisen, das so ausgebildet und zwischen der Fahrzeugscheibe und dem oberen Rand des Anbauteils einpassbar ist, dass in montierter Position des Anbauteils ein im Wesentlichen flächenbündiger Übergang zwischen der Außenseite der Fahrzeugscheibe und dem Anbauteil einstellbar ist.

Das Verbindungselement weist bevorzugt wenigstens einen Anschlag auf, der an dem Rand der ersten Glasscheibe und / oder an dem Rand der zweiten Glasscheibe anliegt.

Die Verbindungs-Anordnung wird erfindungsgemäß bei der Verbindung der ersten Glasscheibe, der Zwischenschicht und der zweiten Glasscheibe zeitgleich gefertigt, indem der erste Verbindungsabschnitt und die Zwischenschicht auf den Glasscheiben oder einer Glasscheibe positioniert werden und dann in einem Autoklaven die Fahrzeugscheibe hergestellt wird. Die Fahrzeugscheibe ist dann nach dem Herstellungsprozess bereits fertig zu einer Verbindungs-Anordnung konfektioniert und das Verbindungselement muss nicht in einem nachfolgenden Schritt - wie im Stand der Technik - mit der Fahrzeugscheibe verbunden werden.

Das erfindungsgemäße Verfahren zur Herstellung einer Verbindungs-Anordnung für eine Fahrzeugscheibe, insbesondere für eine Windschutzscheibe, umfasst die folgenden Schritte:
- Bereitstellen wenigstens einer ersten und einer zweiten Glasscheibe, und
- Bereitstellen einer Zwischenschicht, und
- Bereitstellen eines Verbindungselementes zum Verbinden der Fahrzeugscheibe mit einem Anbauteil, wobei das Verbindungselement einen ersten Verbindungsabschnitt aufweist, der an der Fahrzeugscheibe festlegbar ist, und einen zweiten Verbindungsabschnitt aufweist, der zur lösbaren Befestigung des Anbauteils eine Fügeaufnahme für ein Fügeelement des Anbauteils hat oder bildet, und

- Positionieren der Zwischenschicht zwischen den Glasscheiben derart, dass in einem Randbereich der herzustellenden Fahrzeugscheibe aus einem Verbundglas, aufweisend die erste Glasscheibe und die zweite Glasscheibe und die zwischen den Glasscheiben angeordnete Zwischenschicht, die Zwischenschicht soweit zurückgesetzt ist, dass der Randbereich einen Spalt zwischen den Glasscheiben aufweist, und
- Positionieren des ersten Verbindungsabschnitts derart, dass dieser innerhalb des Spaltes der herzustellenden Fahrzeugscheibe angeordnet wird, und
- Verbinden der Glasscheiben, der Zwischenschicht und des ersten Verbindungsabschnittes, so dass der erste Verbindungsabschnitt zwischen den Glasscheiben fixiert ist.

Das Verbinden der Glasscheiben, der Zwischenschicht und des ersten Verbindungsabschnittes kann bevorzugt in einem Autoklaven bei erhöhtem oder bei reduziertem Druck gegenüber der Atmosphäre und bei erhöhter Temperatur erfolgen. Die Temperatur kann im Bereich von 100°C bis 160°C, bevorzugt im Bereich von 120°C bis 150°, besonders bevorzugt im Bereich von 130°C bis 145°C liegen. Der Druck kann im Bereich von 5 bar bis 20 bar, bevorzugt im Bereich von 8 bar bis 15 bar, besonders bevorzugt im Bereich von 10 bar bis 13 bar liegen. Der Druck kann alternativ im Bereich von 0,1 bar bis 0,9 bar, bevorzugt im Bereich von 0,3 bar bis 0,7 bar, besonders bevorzugt im Bereich von 0,5 bar bis 0,6 bar liegen.

Varianten des für das Verfahren nutzbaren Verbindungselementes sind vorstehend beschrieben. Beispielhaft kann das Verbindungselement ferner wenigstens einen Klemmabschnitt aufweisen der zusammen mit dem ersten Verbindungsabschnitt eine der Glasscheiben randseitig umgreift. Das Verfahren kann für ein derartiges Verbindungselement den zusätzlichen Schritt umfassen, dass vor dem Verbinden der Glasscheiben, der Zwischenschicht und des ersten Verbindungsabschnittes das Verbindungselement mittels des Klemmabschnittes und des ersten Verbindungsabschnittes in dem Randbereich an einer der Glasscheiben vorpositioniert wird.

Die Erfindung wird anhand der nachfolgenden lediglich Ausführungsbeispiele darstellender Figuren näher erläutert. Gleiche oder funktionsgleiche Elemente sind mit den gleichen Bezugszeichen versehen. Es zeigen:
- Fig. 1: eine Querschnittsdarstellung einer Verbindungs-Anordnung für eine Fahrzeugscheibe;
- Fig. 2: eine Querschnittsdarstellung einer für die Verbindungs-Anordnung verwendbaren Fahrzeugscheibe;
- Fig. 3: eine Querschnittsdarstellung einer weiteren Ausführungsform einer Verbindungs-Anordnung für eine Fahrzeugscheibe;
- Fig. 4: eine Querschnittsdarstellung einer weiteren Verbindungs-Anordnung für eine Fahrzeugscheibe;
- Fig. 5: eine dreidimensionale Darstellung einer Verbindungs-Anordnung für eine Fahrzeugscheibe.

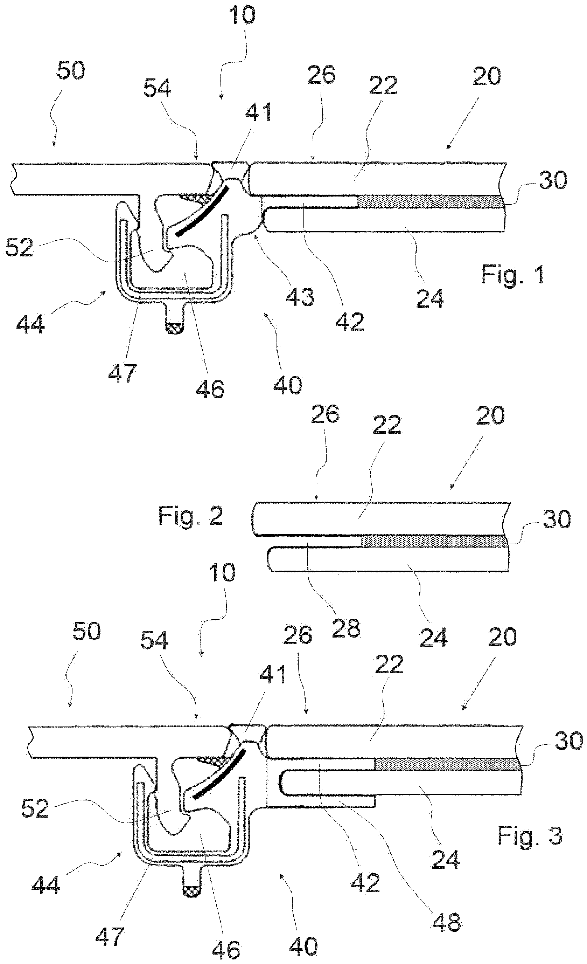

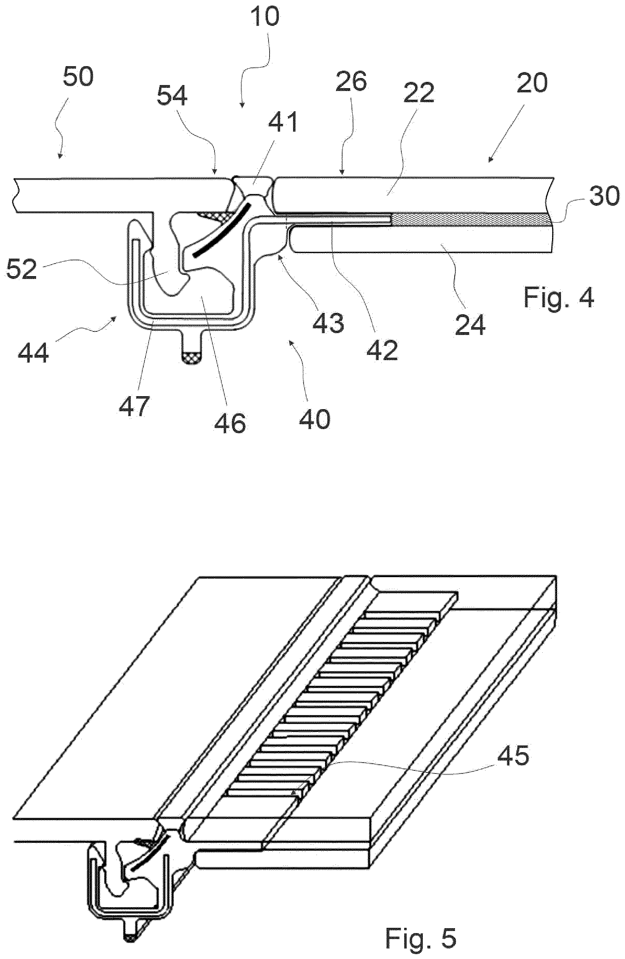

Die Fig. 1 zeigt eine Verbindungs-Anordnung 10 für eine Fahrzeugscheibe 20, insbesondere für eine Windschutzscheibe, mit einer Fahrzeugscheibe 20 aus einem Verbundglas aufweisend wenigstens eine erste Glasscheibe 22 und eine zweite Glasscheibe 24 und eine zwischen den Glasscheiben 22, 24 angeordnete Zwischenschicht 30. Bei der Zwischenschicht 30 handelt es sich um eine polymere Zwischenschicht aus beispielsweise Polyvinylbutyral (PVB), Ethylenvinylacetat (EVA), Polyacrylat (PA), Polymethylmethacrylat (PMMA), Polyurethan (PU) oder Thermoplastischen Elastomeren auf Urethanbasis (TPU). Die Verbindungs-Anordnung 10 für eine Fahrzeugscheibe 20 weist ferner ein Verbindungselement 40 zum Verbinden der Fahrzeugscheibe 20 mit einem Anbauteil 50 auf, wobei das Verbindungselement 40 einen ersten Verbindungsabschnitt 42 aufweist, der an der Fahrzeugscheibe 20 festlegbar ist, und einen zweiten Verbindungsabschnitt 44 aufweist, der zur lösbaren Befestigung des Anbauteils 50 eine Fügeaufnahme 46 für ein Fügeelement 52 des Anbauteils 50 hat oder bildet. In einem Randbereich 26 der Fahrzeugscheibe 20 ist die Zwischenschicht 30 soweit zurückgesetzt, dass der Randbereich 26 einen Spalt 28 zwischen den Glasscheiben 22, 24 aufweist. Der erste Verbindungsabschnitt 42 ist innerhalb des Spaltes 28 angeordnet und zwischen den Glasscheiben 22, 24 fixiert. Hierbei muss der Verbindungsabschnitt 42 den Spalt 28 nicht zwingend komplett ausfüllen. Die erste Glasscheibe 22 ist in Einbaulage der Fahrzeugscheibe 20 oberhalb der zweiten Glasscheibe 24 angeordnet, und die erste Glasscheibe 22 steht im Randbereich 26 über die zweite Glasscheibe 24 über. Hierdurch kann ein Teil des Verbindungselementes 40 von der ersten Glasscheibe 22 verdeckt werden. Der erste Verbindungsabschnitt 42 weist zumindest abschnittsweise Materialschwächungen 45 (vgl. Fig. 5) in Form von Randausnehmungen auf. In den in den Figuren gezeigten Schnittdarstellungen sind die Materialschwächungen 45 durch eine gestrichelte Linie angedeutet. Die Fügeaufnahme 46 weist eine Hinterschneidung zur Aufnahme eines als Rippe ausgebildeten Fügeelements 52, welches kraft- und / oder formschlüssig in der Fügeaufnahme 46 festlegbar ist, auf. Das Verbindungselement 40 ist als eine Profilleiste, in diesem Fall als eine Kunststoff-Profilleiste ausgebildet. Die Kunststoff-Profilleiste weist bereichsweise eine Einlage 47 aus einem metallischen Werkstoff auf. Alternativ oder in Kombination kann die Einlage 47 auch aus einem faserverstärkten Kunststoff gebildet sein. Die Einlage 47 ist als separater Profilkörper ausgebildet. Der separate Profilkörper wird während der Extrusion der Kunststoff-Profilleiste in das entsprechende Extrusionswerkzeug eingeführt, so dass sich das Kunststoff-Profil und die Einlage 47 miteinander verbinden. Das Verbindungselement 40 weist wenigstens ein Dichtelement 41 auf, das so ausgebildet und zwischen der Fahrzeugscheibe 20 und den oberen Rand 44 des Anbauteils 50 einpassbar ist, dass in montierter Position des Anbauteils 50 ein im Wesentlichen flächenbündiger Übergang zwischen der Außenseite 21 der Fahrzeugscheibe 20 und dem Anbauteil 50 einstellbar ist. Das Verbindungselement 40 weist einen Anschlag 43 auf, der an dem Rand der zweiten Glasscheibe 24 anliegt. Der Anschlag verhindert, dass der erste Verbindungsabschnitt 42 zu weit in den Spalt 28 hineingeschoben werden kann und die Zwischenschicht 30 beschädigt bzw. keine definierte Position von Verbindungselement 40 zu Fahrzeugscheibe 20 vorliegt.

Die Fig. 2 zeigt eine für die Verbindungs-Anordnung 10 verwendbare Fahrzeugscheibe 20 aus einem Verbundglas aufweisend wenigstens eine erste Glasscheibe 22 und eine zweite Glasscheibe 24 und eine zwischen den Glasscheiben 22, 24 angeordnete Zwischenschicht 30.

Die Fig. 3 unterscheidet sich von Fig. 1 dahingehend, dass das Verbindungselement 40 ferner wenigstens einen Klemmabschnitt 48 aufweist, der zusammen mit dem ersten Verbindungsabschnitt 42 die zweite Glasscheibe 24 randseitig umgreift.

Die Fig. 4 zeigt eine Verbindungs-Anordnung nach Fig. 1, wobei hier der erste Verbindungsabschnitt 42 durch einen Teilbereich der Einlage 47 gebildet ist. Insbesondere bei relativ engen Spalten 28 kann es von Vorteil sein, lediglich die Einlage 47 in dem Spalt 28 anzuordnen und zwischen den Glasscheiben 22, 24 zu fixieren.

Die Fig. 5 zeigt in einer dreidimensionalen Darstellung die Verbindungs-Anordnung aus Fig. 1. Der erste Verbindungsabschnitt 42 weist zumindest abschnittsweise Materialschwächungen 45 (hier beispielhaft nur eine Materialschwächung mit einem Bezugszeichen versehen) in Form von Randausnehmungen, also Ausnehmungen die zum Rand hin offen sind, auf. Die Materialschwächungen 45 sind in Längsrichtung der Kunststoff-Profilleiste wiederkehrend angeordnet. Ähnlich einem sogenannten Gliederband kann sich so der Verbindungsabschnitt 42 bzw. das Verbindungselement 40 besser an die Kontur des Randbereiches 26 der Fahrzeugscheibe 20 anpassen, welche in der Regel eine dreidimensionale Kurve beschreibt. Die Materialschwächungen 45 können nach der Extrusion der Kunststoff-Profilleiste durch eine Stanz-Walze hergestellt werden.

Das erfindungsgemäße Verfahren zur Herstellung einer Verbindungs-Anordnung 10 für eine Fahrzeugscheibe 20, insbesondere für eine Windschutzscheibe, umfasst die folgenden Schritte:
- Bereitstellen wenigstens einer ersten 22 und einer zweiten Glasscheibe 24, und
- Bereitstellen einer Zwischenschicht 30, und
- Bereitstellen eines Verbindungselementes 40 zum Verbinden der Fahrzeugscheibe 20 mit einem Anbauteil 50, wobei das Verbindungselement 40 einen ersten Verbindungsabschnitt 42 aufweist, der an der Fahrzeugscheibe 20 festlegbar ist, und einen zweiten Verbindungsabschnitt 44 aufweist, der zur lösbaren Befestigung des Anbauteils 50 eine Fügeaufnahme 46 für ein Fügeelement 52 des Anbauteils 50 hat oder bildet, und
- Positionieren der Zwischenschicht 30 zwischen den Glasscheiben 22, 24 derart, dass in einem Randbereich 26 der herzustellenden Fahrzeugscheibe 20 aus einem Verbundglas, aufweisend die erste Glasscheibe 22 und die zweite Glasscheibe 24 und die zwischen den Glasscheiben 22, 24 angeordnete Zwischenschicht 30, die Zwischenschicht 30 soweit zurückgesetzt ist, dass der Randbereich 26 einen Spalt 28 zwischen den Glasscheiben 22, 24 aufweist, und
- Positionieren des ersten Verbindungsabschnitts 42 derart, dass dieser innerhalb des Spaltes 28 der herzustellenden Fahrzeugscheibe 20 angeordnet wird, und
- Verbinden der Glasscheiben 22, 24, der Zwischenschicht 30 und des Verbindungsabschnittes 42, so dass der erste Verbindungsabschnitt 42 zwischen den Glasscheiben 22, 24 fixiert ist.

Das Verbinden der Glasscheiben 22, 24, der Zwischenschicht 30 und des Verbindungsabschnittes 42 kann bevorzugt in einem Autoklaven bei erhöhtem oder bei reduziertem Druck gegenüber der Atmosphäre und bei erhöhter Temperatur erfolgen. Die Temperatur kann im Bereich von 100°C bis 160°C, bevorzugt im Bereich von 120°C bis 150°, besonders bevorzugt im Bereich von 130°C bis 145°C liegen. Der Druck kann im Bereich von 5 bar bis 20 bar, bevorzugt im Bereich von 8 bar bis 15 bar, besonders bevorzugt im Bereich von 10 bar bis 13 bar liegen. Der Druck kann alternativ im Bereich von 0,1 bar bis 0,9 bar, bevorzugt im Bereich von 0,3 bar bis 0,7 bar, besonders bevorzugt im Bereich von 0,5 bar bis 0,6 bar liegen.

Beispielhaft kann das Verbindungselement 40 ferner wenigstens einen Klemmabschnitt 48 aufweisen der zusammen mit dem ersten Verbindungsabschnitt 42 eine der Glasscheiben 22, 24 randseitig umgreift. Das Verfahren kann für ein derartiges Verbindungselement 40 den zusätzlichen Schritt umfassen, dass vor dem Verbinden der Glasscheiben 22, 24, der Zwischenschicht 30 und des ersten Verbindungsabschnittes 42 das Verbindungselement 40 mittels des Klemmabschnittes 48 und des ersten Verbindungsabschnittes 42 in dem Randbereich 26 an einer der Glasscheiben 22, 24 vorpositioniert wird.

## Patentansprüche

1. Verfahren zur Herstellung einer Verbindungs-Anordnung (10) für eine Fahrzeugscheibe (20), insbesondere für eine Windschutzscheibe, umfassend die folgenden Schritte:
- Bereitstellen wenigstens einer ersten und einer zweiten Glasscheibe (22, 24), und
- Bereitstellen einer Zwischenschicht (30), und
- Bereitstellen eines Verbindungselementes (40) zum Verbinden der Fahrzeugscheibe (20) mit einem Anbauteil (50), wobei das Verbindungselement (40) einen ersten Verbindungsabschnitt (42) aufweist, der an der Fahrzeugscheibe (20) festlegbar ist, und einen zweiten Verbindungsabschnitt (44) aufweist, der zur lösbaren Befestigung des Anbauteils (50) eine Fügeaufnahme (46) für ein Fügeelement (52) des Anbauteils (50) hat oder bildet, und
- Positionieren der Zwischenschicht (30) zwischen den Glasscheiben (22, 24) derart, dass in einem Randbereich (26) der herzustellenden Fahrzeugscheibe (20) aus einem Verbundglas, aufweisend die erste Glasscheibe (22) und die zweite Glasscheibe (24) und die zwischen den Glasscheiben (22, 24) angeordnete Zwischenschicht (30), die Zwischenschicht (30) soweit zurückgesetzt ist, dass der Randbereich (26) einen Spalt (28) zwischen den Glasscheiben (22, 24) aufweist, und
- Positionieren des ersten Verbindungsabschnitts (42) derart, dass dieser innerhalb des Spaltes (28) der herzustellenden Fahrzeugscheibe (20) angeordnet wird, und
- Verbinden der Glasscheiben (22, 24), der Zwischenschicht (30) und des ersten Verbindungsabschnittes (42), so dass der erste Verbindungsabschnitt (42) zwischen den Glasscheiben (22, 24) fixiert ist, wobei
die Verbindungs-Anordnung (10) bei der Verbindung der ersten Glasscheibe (22), der Zwischenschicht (30) und der zweiten Glasscheibe (24) zeitgleich gefertigt wird, indem der erste Verbindungsabschnitt (42) und die Zwischenschicht (30) auf den Glasscheiben (22, 24) oder einer Glasscheibe (22, 24) positioniert werden und dann in einem Autoklaven die Fahrzeugscheibe (20) hergestellt wird.

2. Verfahren zur Herstellung einer Verbindungs-Anordnung (10) nach Anspruch 1, **dadurch gekennzeichnet, dass** das Verbindungselement (40) ferner wenigstens einen Klemmabschnitt (48) aufweist der zusammen mit dem ersten Verbindungsabschnitt (42) eine der Glasscheiben (22, 24) randseitig umgreift.

3. Verfahren zur Herstellung einer Verbindungs-Anordnung (10) nach Anspruch 1 oder 2, **dadurch gekennzeichnet, dass** die erste Glasscheibe (22) in Einbaulage der Fahrzeugscheibe (20) oberhalb der zweiten Glasscheibe (24) angeordnet ist, und die erste Glasscheibe (22) im Randbereich (26) über die zweite Glasscheiben (24) übersteht.

4. Verfahren zur Herstellung einer Verbindungs-Anordnung (10) nach einem der vorstehenden Ansprüche, **dadurch gekennzeichnet, dass** der erste Verbindungsabschnitt (42) zumindest abschnittsweise Materialschwächungen (45), vorzugsweise Randausnehmungen, aufweist.

5. Verfahren zur Herstellung einer Verbindungs-Anordnung (10) nach einem der vorstehenden Ansprüche, **dadurch gekennzeichnet, dass** die Fügeaufnahme (46) eine Hinterschneidung zur Aufnahme eines als Rippe ausgebildeten Fügeelements (52), welches kraft- und/oder formschlüssig in der Fügeaufnahme (46) festlegbar ist, aufweist.

6. Verfahren zur Herstellung einer Verbindungs-Anordnung (10) nach einem der vorstehenden Ansprüche, **dadurch gekennzeichnet, dass** das Verbindungselement (40) als eine Profilleiste ausgebildet ist.

7. Verfahren zur Herstellung einer Verbindungs-Anordnung (10) nach Anspruch 6, **dadurch gekennzeichnet, dass** die Profilleiste als eine Kunststoff-Profilleiste ausgebildet ist.

8. Verfahren zur Herstellung einer Verbindungs-Anordnung (10) nach Anspruch 7, **dadurch gekennzeichnet, dass** Kunststoff-Profilleiste wenigstens bereichsweise eine Einlage (47) aus einem metallischen Werkstoff oder aus einem faserverstärkten Kunststoff aufweist.

9. Verfahren zur Herstellung einer Verbindungs-Anordnung (10) nach Anspruch 8, **dadurch gekennzeichnet, dass** die Einlage (47) als separater Profilkörper ausgebildet ist.

10. Verfahren zur Herstellung einer Verbindungs-Anordnung (10) nach Anspruch 8 oder 9, **dadurch gekennzeichnet, dass** der erste Verbindungsabschnitt (42) durch einen Teilbereich der Einlage (47) gebildet ist.

11. Verfahren zur Herstellung einer Verbindungs-Anordnung (10) nach einem der vorstehenden Ansprüche, **dadurch gekennzeichnet, dass** das Verbindungselement (40) wenigstens ein Dichtelement (41) aufweist, das so ausgebildet und zwischen der Fahrzeugscheibe (20) und dem oberen Rand (54) des Anbauteils (50) einpassbar ist, dass in montierter Position des Anbauteils (50) ein im Wesentlichen flächenbündiger Übergang zwischen der Außenseite (21) der Fahrzeugscheibe (20) und dem Anbauteil (50) einstellbar ist.

12. Verfahren zur Herstellung einer Verbindungs-Anordnung (10) nach einem der vorstehenden Ansprüche, **dadurch gekennzeichnet, dass** das Verbindungselement (40) wenigstens einen Anschlag (43) aufweist, der an dem Rand der ersten Glasscheibe (22) und / oder an dem Rand der zweiten Glasscheibe (24) anliegt.

## Claims

1. A method for producing a connection assembly (10) for a vehicle window (20), in particular for a windscreen, comprising the following steps:
- providing at least a first and a second glass pane (22, 24), and
- providing an intermediate layer (30), and
- providing a connecting element (40) for connecting the vehicle window (20) to a mounting part (50), wherein the connecting element (40) comprises a first connecting section (42), which can be fixed to the vehicle window (20), and a second connecting section (44), which has or forms a joining receptacle (46) for a joining element (52) of the mounting part (50) for the releasable attachment of the mounting part (50), and
- positioning the intermediate layer (30) between the glass panes (22, 24) in such a way that in an edge region (26) of the vehicle window (20) to be produced, which is made of a laminated glass, comprising the first glass pane (22) and the second glass pane (24) and the intermediate layer (30) arranged between the glass panes (22, 24), the intermediate layer (30) is set back so far that the edge region (26) has a gap (28) between the glass panes (22, 24), and
- positioning the first connecting section (42) in such a way that it is arranged within the gap (28) of the vehicle window (20) to be produced, and
- connecting the glass panes (22, 24), the intermediate layer (30) and the first connecting section (42) so that the first connecting section (42) is fixed between the glass panes (22, 24), wherein
the connection assembly (10) is made simultaneously while joining the first glass pane (22), the intermediate layer (30) and the second glass pane (24) by positioning the first connecting section (42) and the intermediate layer (30) on the glass panes (22, 24) or on a glass pane (22, 24) and then producing the vehicle window (20) in an autoclave.

2. The method for producing a connection assembly (10) according to claim 1, **characterised in that** the connecting element (40) further comprises at least one clamping section (48) which, together with the first connecting section (42), peripherally engages one of the glass panes (22, 24).

3. The method for producing a connection assembly (10) according to claim 1 or 2, **characterised in that** in the installed position of the vehicle window (20) the first glass pane (22) is arranged above the second glass pane (24) and the first glass pane (22) projects beyond the second glass pane (24) in the edge region (26).

4. The method for producing a connection assembly (10) according to one of the preceding claims, **characterised in that** the first connecting section (42) has material weakenings (45), preferably edge recesses, at least in some sections.

5. The method for producing a connection assembly (10) according to one of the preceding claims, **characterised in that** the joining receptacle (46) has an undercut for receiving a joining element (52) in the form of a rib, which can be fixed non-positively and/or positively in the joining receptacle (46).

6. The method for producing a connection assembly (10) according to one of the preceding claims, **characterised in that** the connecting element (40) is in the form of a profile strip.

7. The method for producing a connection assembly (10) according to claim 6, **characterised in that** the profile strip is in the form of a plastic profile strip.

8. The method for producing a connection assembly (10) according to claim 7, **characterised in that** the plastic profile strip has, at least in some areas, an insert (47) made of a metallic material or of a fibre-reinforced plastic.

9. The method for producing a connection assembly (10) according to claim 8, **characterised in that** the insert (47) is in the form of a separate profile body.

10. The method for producing a connection assembly (10) according to claim 8 or 9, **characterised in that** the first connecting section (42) is formed by a subregion of the insert (47).

11. The method for producing a connection assembly (10) according to one of the preceding claims, **characterised in that** the connecting element (40) comprises at least one sealing element (41), which is formed and can be fitted between the vehicle window (20) and the upper edge (54) of the mounting part (50) in such a way that in the assembled position of the mounting part (50) a substantially flush transition between the outside (21) of the vehicle window (20) and the mounting part (50) can be established.

12. The method for producing a connection assembly (10) according to one of the preceding claims, **characterised in that** the connecting element (40) comprises at least one stop (43) which abuts the edge of the first glass pane (22) and/or the edge of the second glass pane (24).

## Revendications

1. Processus de fabrication d'un agencement de liaison (10) pour une vitre de véhicule (20), en particulier pour un pare-brise, comprenant les étapes suivantes :
- mise à disposition d'au moins une première et d'au moins une deuxième vitre en verre (22, 24), et
- mise à disposition d'une couche intermédiaire (30), et
- mise à disposition d'un élément de liaison (40) pour relier la vitre de véhicule (20) à une pièce rapportée (50), ledit élément de liaison (40) présentant une première section de liaison (42) qui peut être fixée sur la vitre de véhicule (20) ainsi qu'une deuxième section de liaison (44) qui, pour la fixation amovible, présente ou forme un logement d'assemblage (46) pour un élément d'assemblage (52) de la pièce rapportée (50), et
- positionnement de la couche intermédiaire (30) entre les vitres en verre (22, 24) de telle façon que, dans une périphérie (26) de la vitre de véhicule (20) à fabriquer en verre feuilleté, comportant la première vitre en verre (22) et la deuxième vitre en verre (24) ainsi que la couche intermédiaire (30) disposée entre les vitres en verre (22, 24), ladite couche intermédiaire (30) est si en retrait que la périphérie (26) présente une fente (28) entre les vitres en verre (22, 24), et
- positionnement de la première section de liaison (42) de telle sorte que celle-ci est agencée à l'intérieur de la fente (28) de la vitre de véhicule (20) à fabriquer, et
- assemblage des vitres en verre (22, 24), de la couche intermédiaire (30) et de la première section de liaison (42) de telle sorte que la première section de liaison (42) est fixée entre les vitres en verre (22, 24),
l'agencement de liaison (10), lors de l'assemblage de la première vitre en verre (22), de la couche intermédiaire (30) et de la deuxième vitre en verre (24), étant réalisé en même temps en positionnant la première section de liaison (42) et la couche intermédiaire (30) sur les vitres en verre (22, 24) ou sur une vitre en verre (22, 24) et la vitre du véhicule (20) étant ensuite fabriquée dans un autoclave.

2. Processus de fabrication d'un agencement de liaison (10) selon la revendication 1, **caractérisé en ce que** l'élément de liaison (40) présent en outre au moins une section de serrage (48) qui, au côté bord, fait prise autour l'une des vitres en verre (22, 24) conjointement avec la première section de liaison (42).

3. Processus de fabrication d'un agencement de liaison (10) selon la revendication 1 ou 2, **caractérisé en ce que** la première vitre en verre (22) est agencée dans la position de montage de la vitre de véhicule (20) au-dessus de la deuxième vitre en verre (24) et **en ce que** la première vitre en verre (22) dépasse par-dessus la deuxième vitre en verre (24) dans la périphérie (26).

4. Processus de fabrication d'un agencement de liaison (10) selon l'une quelconque des revendications précédentes, **caractérisé en ce que** la première section de liaison (42) présente, au moins en partie, des affaiblissements du matériau (45), principalement des évidements périphériques.

5. Processus de fabrication d'un agencement de liaison (10) selon l'une quelconque des revendications précédentes, **caractérisé en ce que** le logement d'assemblage (46) est doté d'une contre-dépouille pour loger un élément d'assemblage (52) configuré comme une nervure, qui peut être fixé par complémentarité de force et/ou de forme dans le logement d'assemblage (46).

6. Processus de fabrication d'un agencement de liaison (10) selon l'une quelconque des revendications précédentes, **caractérisé en ce que** l'élément de liaison (40) est configuré comme une barre profilée.

7. Processus de fabrication d'un agencement de liaison (10) selon la revendication 6, **caractérisé en ce que** la barre profilée est configurée comme une barre profilée en matière plastique.

8. Processus de fabrication d'un agencement de liaison (10) selon la revendication 7, **caractérisé en ce que** la barre profilée en matière plastique présente, au moins en partie, un élément intercalaire (47) composé d'un matériau métallique ou d'une matière plastique renforcée de fibres.

9. Processus de fabrication d'un agencement de liaison (10) selon la revendication 8, **caractérisé en ce que** l'élément intercalaire (47) est configurée comme un corps profilé séparé.

10. Processus de fabrication d'un agencement de liaison (10) selon la revendication 8 ou 9, **caractérisé en ce que** la première section de liaison (42) est constituée par une zone partielle de l'élément intercalaire (47).

11. Processus de fabrication d'un agencement de liaison (10) selon l'une quelconque des revendications précédentes, **caractérisé en ce que** l'élément de liaison (40) présente au moins un élément d'étanchéité (41) qui est configuré et peut s'ajuster entre la vitre du véhicule (20) et le bord supérieur (54) de la pièce rapportée (50) de telle sorte que, lorsque la pièce rapportée (50) est en position montée, une transition, essentiellement affleurée en surface, entre la face extérieure (21) de la vitre du véhicule (20) et la pièce rapportée (50) peut être ajustée.

12. Processus de fabrication d'un agencement de liaison (10) selon l'une quelconque des revendications précédentes, **caractérisé en ce que** l'élément de liaison (40) présente au moins une butée (43) qui se repose contre le bord de la première vitre en verre (22) et/ou contre le bord de la deuxième vitre en verre (24).
